# EUROPEAN PATENT SPECIFICATION

(11) **EP 1 622 406 B1**
(45) Date of publication and mention of the grant of the patent: **23.01.2008**
(21) Application number: 05016426.8
(22) Date of filing: 28.07.2005
(51) Int. Cl.: H04Q 7/28

(54) **Providing talk burst authority in group communication system supporting ptt service**
Bereitstellen von Sprechburstautorität in einem den PTT Dienst unterstützenden Gruppenkommunikationssystem
Fourniture d'autorité des rafales de conversation dans un système de communication de groupe supportant le service PTT

(30) Priority: 28.07.2004 US 591602 P; 18.06.2005 KR 2005052748
(43) Date of publication of application: 01.02.2006
(73) Proprietor: LG ELECTRONICS INC., Seoul (KR)
(72) Inventor: Lim, Guk-Chan, Uiwang Gyeonggi-Do (KR)
(74) Representative: Katérle, Axel

(56) References cited:
- US-A1- 2004 071 099
- US-A1- 2004 127 233
- US-B1- 6 449 491
- "PUSH-TO-TALK OVER CELLULAR (POC) USER PLANE; TRANSPORT PROTOCOLS; POC RELEASE 1.0;" TRANSPORT PROTOCOLS V1.1.0, August 2003 (2003-08), page COMPLETE, XP000863836

## Description

### BACKGROUND OF THE INVENTION

### 1. Field of the Invention

The present invention relates to a PTT service system, and particularly, to a method for managing a talk burst (e.g., right to talk, privilege to speak, floor request) in a PTT service system in which a particular PTT terminal having a master function controls the talk bursts.

### 2. Description of the Background Art

A PTT (Push-To-Talk) service is a half-duplex communication technique that grants a talk burst (i.e., floor grant, permission to talk, etc.) to only one user at a time, and provides one-to-one or one-to-many communication according to a user's selection. Here, a user that has been granted the right to talk is said to have been granted the "floor" or granted a "talk burst", and these expressions can thus be used interchangeably.

US 2004/0127233 A1 describes a group communication system wherein a talkgroup creator selects other members of the talkgroup and manages the talkgroup.

In one-to-many communication, a PTT service providing voice communication is shared between a plurality of users to talk to. If a particular user selects a plurality of users or a group and presses a PTT key, a session is formed between PTT terminals through a PTT server, and all selected recipients participate in the session and can transmit/receive voice data.

Every PTT terminal having a session established therefor can perform a PTT communication but must take a talk burst in order to transmit voice data. The PTT server controls the talk burst such that only one user among the users participating in the session can transmit voice data.

As described, since the PTT server performs talk burst control of the PTT service in accordance with the conventional art, when a talk burst is allocated to a particular user, another user cannot take a talk burst until the talk burst is released.

In addition, in the conventional talk burst management, in order to exclude a user monopolizing a talk burst or a user speaking unnecessary language from a group chat, it is inconvenient for the user to perform a procedure in which the user terminates the PTT communication, releases the session, re-establishes a group and establishes a session again.

### BREIF DESCRIPTION OF THE INVENTION

Therefore, an object of the present invention is to provide a method for managing a talk burst in a PTT service system in which master authority capable of controlling a talk burst management procedure is given to a particular user in order to smoothly manage the talk burst.

To achieve these and other advantages and in accordance with the purpose of the present invention, there is provided a method of talk burst management according to the features of claim 1.

The present invention further provides a server according to the features of claim 4.

Also, the present invention provides a user terminal according to the features of claim 7.

The master authority can be received after requesting session establishment with other user terminals. The floor control procedures can include receiving floor grants and floor denials from the server, and the floor control procedures can allow fair access to multiple user terminals. Also, the received master authority can be transferred to a different user terminal, and the transferred master authority can be released and returned from the different user terminal. Additionally, the group communication system supports a push-to-talk function.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a flowchart illustrating a method for managing a talk burst in accordance with the present invention.
Figure 2 depicts a group communication system showing a server and a single user terminal according to the present invention, although many user terminals may be employed.

### DETAILED DESCRIPTION OF THE INVENTION

Hereafter, some preferred embodiments of the present invention will be explained in detail by referring to the accompanying drawings. In the following description, some well-known functions or constructions are not described in detail because doing so may obscure the invention in unnecessary detail. Several exemplary embodiments of the present invention that may be used separately or in any combination to achieve talk burst allocation will be described in more detail hereafter.

Push-To-Talk, commonly abbreviated as PTT, is a method of conversing on half-duplex communication lines by pushing a button to allow voice communication to be transmitted and releasing the button to allow voice communication to be received. Such PTT features are being implemented in recent mobile terminals (e.g., mobile phones, handsets, wireless devices, etc.), allowing a mobile terminal to function as a digital two-way radio (e.g., a walkie-talkie) in push-to-talk operation. One person at a time can talk by pressing a PTT button and one or several others can listen instantly. Certain PTT schemes are based on 2.5G packet-switched networks (e.g., CDMA, GPRS, etc.) and use particular protocols, namely, SIP (Session Initiation Protocol) and RTP (Real Time Transport Protocol). These particular versions of PTT are called "Push-To-Talk over Cellular" (or Push-over-Cellular), commonly abbreviated as PoC.

As cellular communication networks continue to evolve and accommodate the transferring of various types of data (voice, images, audio, video, multimedia, etc.), various Internet access technologies are being employed. An example would be the Internet Protocol (IP), which is a data-oriented protocol used by source and destination hosts for communicating data across a packet-switched network (e.g., the Internet), and examples include IPv4, IPv6, and the like.

Among the numerous features of PTT (including a particular type of PTT called PoC), the floor control procedures related to a server (e.g., a PTT server) and a client (e.g., a PTT client) will be considered hereafter. In particular, the server can be considered as a centralized point that grants a "floor" to a PTT user who wishes to speak to a talk group. Namely, a user can "take the floor" and speak to other users who can only listen during that time. The client includes various mechanisms to facilitate the priority allocation required in granting the floor to the user.

When multiple users wish to take the floor (in order to talk with other users) by respectively sending a transmission request (e.g., a floor request, a talk burst request, etc.), priorities should be allocated such that the users take turns in speaking by considering whether their transmission requests that have been granted or denied. For example, the priorities may be allocated on a first come first served basis. For each transmission request from each client, the server may either grant or deny each request based upon the communications environment or other factors thereof.

In the present invention, talk burst allocation can also be referred to as obtaining the right to talk (or right to speak) or obtaining permission to transmit (access request). A user that is granted the right to talk is said to have been granted the "floor" or granted a "talk burst", and these expressions can be used interchangeably.

In the present invention, master authority with which a talk burst can be managed is given to a particular user, and a PTT server controls the talk burst according to a talk burst managing procedure selected by the user having the master authority.

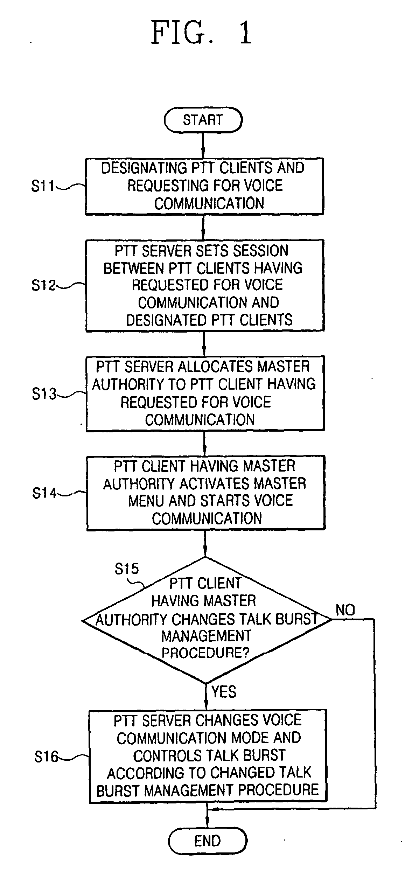

Figure 1 is a flowchart illustrating a method for managing a talk burst in accordance with the present invention. A particular user designates two or more users to talk to or a group by a PTT client and then requests for a group chat (S11), a PTT server establishes a session for a PTT service with the selected PTT client (S12), and gives master authority for talk burst management to the PTT client having requested for the group chat (S13). Here, a "session" refers to a communications relationship or link between two or more user devices (e.g., PTT terminals) during which voice and data can be sent and received. At this time, the PTT client having been given the master authority activates a master menu which is embedded in itself or is received from the PTT server (S14).

If each user presses a PTT key and requests for a talk burst in the session, the PTT server allocates the talk burst to one PTT client among the PTT clients having requested for the talk burst. In general, the PTT server allocates the talk burst to the PTT client having requested for the group chat.

If the user changes a talk burst management procedure through the PTT client having the master authority (S15), the PTT server changes a group chat mode to the changed talk burst management procedure and controls the talk burst according to the changed management procedure (S16).

A talk burst management procedure which the PTT client having the master authority can choose is as follows: a procedure that automatically allocates a talk burst once to each user having a session established therefor, a procedure that automatically releases a talk burst when the talk burst is monopolized over a particular period of time, a procedure that forbids a talk burst of a particular user, a procedure that transfers master authority to another user, a procedure by which a user having a master function forcibly releases a talk burst of another user or has priority with respect to the next talk burst when the user having the master function has a message to be urgently sent, or the like. The PTT client having the master authority may give talk burst priority to another PTT client participating in a session. All of the above are mere examples of various talk burst management (floor control) procedures that can guarantee fair access for multiple users (PTT clients, user terminals, etc.), and many other types of procedures may also possible and intended to be handled by the present invention.

An operation of a PTT service system to which a method for managing a talk burst in accordance with the present invention is applied will be described in detail.

First, the PTT service system includes first to fourth PTT clients and a PTT server for establishing a session between the PTT clients and controlling a talk burst. In addition, it is assumed that the first PTT client selects the second to fourth PTT clients as clients to talk to and requests for a talk burst.

If the first PTT client sends an invite message (i.e., floor invite) to the PTT server, the PTT server performs initialization for voice communication and then gives master authority for talk burst management to the first PTT client. The PTT server sends invite messages to the second to fourth PTT clients which are selected by the first PTT client.

The first PTT client having the master authority activates a master menu which is embedded in a terminal or is downloaded from the PTT server. The second PTT client, the third PTT client and the fourth PTT client having received the invite messages from the PTT server individually determine whether or not to accept the invitations. At this time, if the PTT client accepts the invitation, an OK signal is transmitted to the PTT server. If the PTT client does not accept the invitation, a NOK signal is transmitted to the PTT server.

The first PTT client having the master authority activates the master menu, sends a message for controlling various operations of the voice communication to the PTT server or determines a talk burst management procedure, and takes authority to send the determined talk burst management procedure to the PTT server.

For example, the first PTT client having the master authority determines a procedure that allocates a talk burst with respect to the second PTT client, the third PTT client and the fourth PTT client having a session established therefor. The first PTT client can release a talk burst of a PTT client monopolizing the talk burst over a particular period of time or forbid a talk burst with respect to a particular PTT client.

In addition, when the first PTT client having the master authority completes a session, the first PTT client transfers its master authority to another PTT client. While another PTT client has a talk burst, if the first PTT client having the master authority urgently needs to send a message, the first PTT client having the master authority may forcibly release the talk burst allocated to said another PTT client.

The first PTT client instructs the PTT server about the talk burst management procedure, and the PTT server performs an operation according to the changed talk burst management procedure such as changing a procedure that allocates a talk burst by changing a voice communication mode, releasing a talk burst of a PTT client, allocating master authority to another PTT client, or the like.

As described so far, as master authority is allocated to a particular PTT client and the PTT client having the master authority controls a talk burst management procedure, the method for managing a talk burst in a PTT service system in accordance with the present invention can efficiently allocate a talk burst and smoothly control session establishment.

In addition, in the method for managing a talk burst in a PTT service system in accordance with the present invention, since a PTT client having the master authority can exclude a particular PTT client from session establishment, inconvenience that a session is re-established to exclude the particular PTT client from the session is eliminated.

In the present invention, the talk burst (floor control) management procedures can be informed to the user through audible, visual or tactile means or any combination thereof, such as outputting information on a display screen of the PTT terminal.

The present invention can be embodied as software, hardware, or a combination of both. For example, talk burst allocation method according to the present invention can be embodied as codes or commands in a software program that can be stored in a storage media (such as an internal memory of the user terminal, a flash memory, etc.) and that can be executed by a processor (such as a microprocessor within the user terminal).

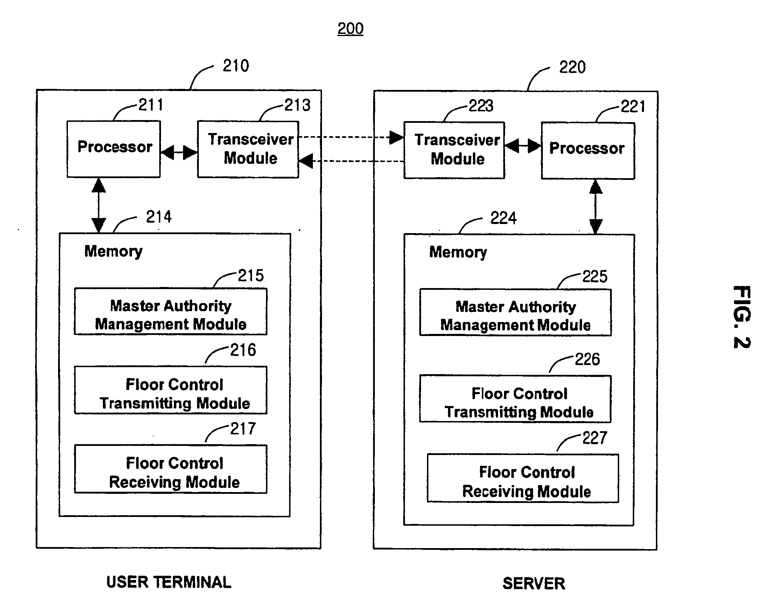

Referring to Figure 2, the present invention provides a server (220) of a group communication system (200), comprising: a transceiver (223) to send and receive communication signals; a processor (221) cooperating with the transceiver; and a storage medium (224) containing instructions (225, 226, 227) executable by the processor to perform the steps of, providing master authority to a particular user terminal, receiving floor control commands from the particular user terminal to handle floor control procedures for other user terminals having a session established thereof, and sending the floor control commands to the other terminals to perform floor control procedures.

The master authority can be provided to the particular user terminal that requested session establishment with other user terminals. Here, the floor control procedures can include providing floor grants and floor denials to one or more other user terminals, and the floor control procedures allow fair access to multiple user terminals. Also, the master authority can be transferred from the particular user terminal to a different user terminal, and the transferred master authority can be released and returned to the particular user terminal. Additionally, the group communication system supports a push-to-talk function.

Also referring to Figure 2, the present invention provides a user terminal (210) of a group communication system (200), comprising: a transceiver (213) to send and receive communication signals; a processor (211) cooperating with the transceiver; and a storage medium (214) containing instructions (215, 216, 217) executable by the processor to perform the steps of, receiving master authority from a server and sending floor control commands to other user terminals via the server to handle floor control procedures for other user terminals having a session established thereof, or receiving floor control commands via the server from another user terminal that has been given master authority from the server.

The master authority can be received after requesting session establishment with other user terminals. The floor control procedures can include receiving floor grants and floor denials from the server, and the floor control procedures can allow fair access to multiple user terminals. Also, the received master authority can be transferred to a different user terminal, and the transferred master authority can be released and returned from the different user terminal. Additionally, the group communication system supports a push-to-talk function.

The features of the present invention are applicable to group (point-to-multipoint) communications, such as half-duplex communications like PTT (and PoC, which is a type of PTT), that allow voice and data communication to be transmitted upon activating a feature (e.g., by pushing a button, upon selecting a soft key, etc.) and allow voice and data communication to be received upon de-activating the feature (e.g., releasing the button, de-selecting the soft key, etc.).

Additionally, it can be clearly understood that the teachings and suggestions of the present invention can also be applicable and are intended to be applied to the so-called "Push-To-x" (PTx) techniques, because PTx is an enhancement of PTT and PoC technologies. Here, PTx refers to an enhanced version of PTT capable of supporting not only voice communications, but also various types of multimedia applications (e.g., photos, ringtones, games, content, SMS, MMS, etc.). An example of PTx is the so-called "Push-To View" (PTV) technology that can allow users to engage in multi-user video conferencing. PTx is expected to change the way we communicate when using mobile or wireless devices. The so-called "push-to" interface can be the main tool for connecting multiple users. Namely, the user's contact list (e.g., a so-called "buddy list") can be the center and starting point for the user's communication experience. By selecting a "push-to-x" function, the user will be able to launch various types of applications and communication sessions, including PTT, video conferencing, sending photos, and not to mention, placing ordinary phone calls. Each user's state of presence ("presence") will be an important component for the user to interface with his contact list. Namely, when the user activates the PTx function, a contact list containing various persons ("buddies") may be displayed with a list of options for each contact person based on their state of presence, capabilities of their mobile terminal or device, interoperability of their network, and the like. Here, the user may interface with his mobile terminal or wireless device through audible, visual, and/or tactile alerts or notifications.

Regarding the terminology used herein, it should be noted that PTT is also referred to as "P2T," and PTx is also referred to as "P2x," and PTV is also referred to as "P2V". Other similar abbreviations or acronyms may also be used to refer to the same basic concepts regarding various "push-to" techniques currently under development and to be newly developed in the near future.

As the present invention may involve communications through Internet access (e.g., VoIP), the features of the present invention are also intended to be applicable to enhanced Internet access services, such as the so-called "Broadband convergence Network (BcN)," which is expected to provide Internet access service with speeds of 50~100Mbps, roughly 50 times faster than conventional broadband services.

## Claims

1. A method of talk burst management in a group communication system supporting half duplex communications, said method comprising the steps of:
- allocating (S13), by a server (220), master authority to a particular terminal (210); and
- controlling, by the server, talk burst allocation with respect to one or more other terminals according to a talk burst management procedure determined by the terminal having the master authority allocated thereto.

2. The method of claim 1, wherein the server (220) allocates the master authority to a terminal that requested establishment of a session with one or more other terminals.

3. The method of claims 1 or 2, wherein the talk burst management procedure comprises at least one of:
- a procedure that allocates a talk burst once to each terminal engaged in a session;
- a procedure that releases a talk burst of a terminal that monopolizes over a certain period of time;
- a procedure that forbids talk burst allocation to a particular terminal;
- a procedure by which the master authority is transferred from the terminal having the master authority to a third party terminal;
- a procedure by which a talk burst allocated to a third party terminal is forcibly released and the terminal having master authority is allowed priority for a next talk burst;
- a procedure that provides talk burst grants and talk burst denials to one or more other terminals;
- a procedure that allows fair access for multiple terminals.

4. A server (220) for a group communication system supporting half duplex communications, comprising:
- a transceiver (223) configured to send and receive communication signals;
- a processor (221) configured to cooperate with the transceiver; and
- a storage medium (224) containing instructions executable by the processor; **characterized in that** the instructions, when executed by the processor, cause the server to perform the steps of:
- providing (S13) master authority to a particular terminal (210);
- receiving from the terminal having the master authority, commands related to a talk burst management procedure determined by the terminal having the master authority;
- controlling talk burst allocation with respect to one or more other terminals according to the received talk burst management procedure.

5. The server of claim 4, wherein the server is configured to provide the master authority to a terminal that requested establishment of a session with one or more other terminals.

6. The server of claims 4 or 5, wherein the talk burst management procedure comprises at least one of:
- a procedure that allocates a talk burst once to each terminal engaged in a session;
- a procedure that releases a talk burst of a terminal that monopolizes over a certain period of time;
- a procedure that forbids talk burst allocation to a particular terminal;
- a procedure by which the master authority is transferred from the terminal having the master authority to a third party terminal;
- a procedure by which a talk burst allocated to a third party terminal is forcibly released and the terminal having master authority is allowed priority for a next talk burst;
- a procedure that provides talk burst grants and talk burst denials to one or more other terminals;
- a procedure that allows fair access for multiple terminals.

7. A terminal (210) for a group communication system supporting half duplex communications, comprising:
- a transceiver (213) configured to send and receive communication signals;
- a processor (211) configured to cooperate with the transceiver; and
- a storage medium (214) containing instructions executable by the processor; **characterized in that** the instructions, when executed by the processor, cause the terminal to perform the steps of:
- receiving master authority from a server (220);
- determining a talk burst management procedure in response to receiving the master authority; and
- sending commands related to the determined talk burst management procedure to the server (220) to instruct the server to control talk burst allocation with respect to one or more other terminals according to the determined talk burst management procedure.

8. The terminal of claim 7, wherein the terminal (210) is configured to send (S11) a request to the server (220) for establishing a session with the one or more other terminals and to receive the master authority in response to sending the request for session establishment.

9. The terminal of claim 7 or 8, wherein the talk burst management procedure comprises at least one of:
- a procedure that allocates a talk burst once to each terminal engaged in a session;
- a procedure that releases a talk burst of a terminal that monopolizes over a certain period of time;
- a procedure that forbids talk burst allocation to a particular terminal;
- a procedure by which the master authority is transferred from the terminal having the master authority to a third party terminal;
- a procedure by which a talk burst allocated to a third party terminal is forcibly released and the terminal having master authority is allowed priority for a next talk burst;
- a procedure that provides talk burst grants and talk burst denials to one or more other terminals;
- a procedure that allows fair access for multiple terminals.

## Patentansprüche

1. Verfahren zur Verwaltung von Sprechberechtigungen in einem Gruppenkommunikationssystem, das eine Halbduplex-Kommunikation unterstützt, wobei das Verfahren die nachfolgenden Schritte umfasst:
- Zuweisen (S13) einer Hauptbefugnis durch einen Server (220) an ein bestimmtes Endgerät (210), und
- Steuern der Sprechberechtigungszuteilung zu einem oder mehreren anderen Endgeräten durch den Server nach Maßgabe einer von dem Endgerät, dem die Hauptbefugnis zugewiesen wurde, bestimmten Sprechberechtigungsverwaltungsprozedur.

2. Verfahren nach Anspruch 1, wobei der Server (220) die Hauptbefugnis einem Endgerät zuweist, das den Aufbau einer Sitzung mit einem oder mehreren anderen Endgeräten angefordert hat.

3. Verfahren nach Anspruch 1 oder 2, wobei die Sprechberechtigungsverwaltungsprozedur wenigstens eine der folgenden Prozeduren umfasst:
- eine Prozedur, die jedem an einer Sitzung teilnehmenden Endgerät einmal eine Sprechberechtigung erteilt,
- eine Prozedur, die einem Endgerät die Sprechberechtigung entzieht, das sie über eine bestimmte Zeitspanne hinaus beansprucht,
- eine Prozedur, die die Erteilung einer Sprechberechtigung an ein bestimmtes Endgerät unterbindet,
- eine Prozedur, durch die die Hauptbefugnis von dem Endgerät, das die Hauptbefugnis innehat, auf ein Endgerät eines Dritten übertragen wird,
- eine Prozedur, mit der eine einem Endgerät eines Dritten erteilte Sprechberechtigung zwangsweise entzogen wird und dem Endgerät, das die Hauptbefugnis hat, die Priorität für die nächste Sprechberechtigung zugewiesen wird,
- eine Prozedur, die einem oder mehreren anderen Endgeräten eine Sprechberechtigung gewährt oder eine Sprechberechtigung verweigert,
- eine Prozedur, die mehreren Endgeräten einen fairen Zugang gewährt.

4. Server (220) für ein Gruppenkommunikationssystem, das eine Halbduplex-Kommunikation unterstützt, umfassend:
- einen Transceiver (223), der zum Senden und Empfangen von Kommunikationssignalen eingerichtet ist,
- einen Prozessor (221), der zur Zusammenarbeit mit dem Transceiver eingerichtet ist, und
- ein Speichermedium (224), das durch den Prozessor ausführbare Befehle enthält, **dadurch gekennzeichnet, dass** die Befehle bei Ausführung durch den Prozessor den Server die folgenden Schritte ausführen lassen:
- Zuweisen (S13) einer Hauptbefugnis zu einem bestimmten Endgerät (210),
- Empfangen von Befehlen, die eine von dem Endgerät mit der Hauptbefugnis bestimmte Sprechberechtigungsverwaltungsprozedur betreffen, von dem die Hauptbefugnis innehabenden Endgerät,
- Steuern der Sprechberechtigungszuteilung zu einem oder mehreren anderen Endgeräten nach Maßgabe der empfangenen Sprechberechtigungsverwaltungsprozedur.

5. Server nach Anspruch 4, wobei der Server dazu eingerichtet ist, die Hauptbefugnis einem Endgerät zuzuweisen, das den Aufbau einer Sitzung mit einem oder mehreren anderen Endgeräten angefordert hat.

6. Server nach Anspruch 4 oder 5, wobei die Sprechberechtigungsverwaltungsprozedur wenigstens eine der folgenden Prozeduren umfasst:
- eine Prozedur, die jedem an einer Sitzung teilnehmenden Endgerät einmal eine Sprechberechtigung erteilt,
- eine Prozedur, die einem Endgerät die Sprechberechtigung entzieht, das sie über eine bestimmte Zeitspanne hinaus beansprucht,
- eine Prozedur, die die Erteilung einer Sprechberechtigung an ein bestimmtes Endgerät unterbindet,
- eine Prozedur, durch die die Hauptbefugnis von dem Endgerät, das die Hauptbefugnis innehat, auf ein Endgerät eines Dritten übertragen wird,
- eine Prozedur, mit der eine einem Endgerät eines Dritten erteilte Sprechberechtigung zwangsweise entzogen wird und dem Endgerät, das die Hauptbefugnis hat, die Priorität für die nächste Sprechberechtigung zugewiesen wird,
- eine Prozedur, die einem oder mehreren anderen Endgeräten eine Sprechberechtigung gewährt oder eine Sprechberechtigung verweigert,
- eine Prozedur, die mehreren Endgeräten einen fairen Zugang gewährt.

7. Endgerät (210) für ein Gruppenkommunikationssystem, das eine Halbduplex-Kommunikation unterstützt, umfassend:
- einen Transceiver (213), der zum Senden und Empfangen von Kommunikationssignalen eingerichtet ist,
- einen Prozessor (211), der zur Zusammenarbeit mit dem Transceiver eingerichtet ist, und
- ein Speichermedium (214), das durch den Prozessor ausführbare Befehle enthält, **dadurch gekennzeichnet, dass** die Befehle bei Ausführung durch den Prozessor den Server die folgenden Schritte ausführen lassen:
- Empfangen einer Hauptbefugnis von einem Server (220),
- Bestimmen einer Sprechberechtigungsverwaltungsprozedur in Antwort auf den Empfang der Hauptbefugnis,
- Senden von Befehlen, welche die bestimmte Sprechberechtigungsverwaltungsprozedur betreffen, an den Server (220), um den Server anzuweisen, die Sprechberechtigungszuteilung zu einem oder mehreren anderen Endgeräten nach Maßgabe der bestimmten Sprechberechtigungsverwaltungsprozedur zu steuern.

8. Endgerät nach Anspruch 7, wobei das Endgerät dazu eingerichtet ist, eine Anforderung zum Aufbau einer Sitzung mit dem einen oder den mehreren anderen Endgeräten an den Server (220) zu schicken (S11) und in Antwort auf die Absendung der Anforderung zum Sitzungsaufbau die Hauptbefugnis entgegenzunehmen.

9. Endgerät nach Anspruch 7 oder 8, wobei die Sprechberechtigungsverwaltungsprozedur wenigstens eine der folgenden Prozeduren umfasst:
- eine Prozedur, die jedem an einer Sitzung teilnehmenden Endgerät einmal eine Sprechberechtigung erteilt,
- eine Prozedur, die einem Endgerät die Sprechberechtigung entzieht, das sie über eine bestimmte Zeitspanne hinaus beansprucht,
- eine Prozedur, die die Erteilung einer Sprechberechtigung an ein bestimmtes Endgerät unterbindet,
- eine Prozedur, durch die die Hauptbefugnis von dem Endgerät, das die Hauptbefugnis innehat, auf ein Endgerät eines Dritten übertragen wird,
- eine Prozedur, mit der eine einem Endgerät eines Dritten erteilte Sprechberechtigung zwangsweise entzogen wird und dem Endgerät, das die Hauptbefugnis hat, die Priorität für die nächste Sprechberechtigung zugewiesen wird,
- eine Prozedur, die einem oder mehreren anderen Endgeräten eine Sprechberechtigung gewährt oder eine Sprechberechtigung verweigert,
- eine Prozedur, die mehreren Endgeräten einen fairen Zugang gewährt.

## Revendications

1. Procédé de gestion de rafales de conversations dans un système de communication de groupe supportant des communications bidirectionnelles à l'alternat, ledit procédé comprenant les étapes consistant à :
- attribuer (S13), par un serveur (220), une autorité maîtresse à un terminal particulier (210) ; et
- contrôler, par le serveur, l'attribution des rafales de conversations par rapport à un ou plusieurs autres terminaux selon une procédure de gestion des rafales de conversations déterminée par le terminal ayant l'autorité maîtresse qui lui est attribuée.

2. Procédé selon la revendication 1, dans lequel le serveur (220) attribue l'autorité maîtresse à un terminal qui a demandé l'établissement d'une session avec un ou plusieurs autres terminaux.

3. Procédé selon la revendication 1 ou 2, dans lequel la procédure de gestion des rafales de conversations comprend au moins une parmi :
- une procédure qui attribue une rafale de conversations une fois à chaque terminal engagé dans une session ;
- une procédure qui libère une rafale de conversations d'un terminal qui monopolise plus d'une certaine période de temps ;
- une procédure qui interdit l'attribution des rafales de conversations à un terminal particulier ;
- une procédure par laquelle l'autorité maîtresse est transférée du terminal ayant l'autorité maîtresse à un terminal tiers ;
- une procédure par laquelle une rafale de conversations attribuée à un terminal tiers est libérée de force et la priorité est donnée au terminal ayant l'autorité maîtresse pour une prochaine rafale de conversations ;
- une procédure qui fournit des allocations de rafales de conversations et des refus de rafales de conversations à un ou plusieurs autres terminaux ;
- une procédure qui autorise un accès équitable aux multiples terminaux.

4. Serveur (220) pour un système de communication de groupe supportant des communications bidirectionnelles à l'alternat, comprenant :
- un émetteur-récepteur (223) configuré pour envoyer et recevoir des signaux de communication ;
- un processeur (221) configuré pour coopérer avec l'émetteur-récepteur ; et
- un support de stockage (224) contenant des instructions pouvant être exécutées par le processeur ;
**caractérisé en ce que** les instructions, lorsqu'elles sont exécutées par le processeur, amènent le serveur à réaliser les étapes consistant à :
- fournir (S13) une autorité maîtresse à un terminal particulier (210) ;
- recevoir du terminal ayant l'autorité maîtresse, des commandes concernant une procédure de gestion des rafales de conversations déterminée par le terminal ayant l'autorité maîtresse ;
- contrôler l'attribution des rafales de conversations par rapport à un ou plusieurs autres terminaux selon la procédure de gestion des rafales de conversations reçue.

5. Serveur selon la revendication 4, dans lequel le serveur est configuré pour fournir l'autorité maîtresse à un terminal qui a demandé l'établissement d'une session avec un ou plusieurs autres terminaux.

6. Serveur selon les revendications 4 ou 5, dans lequel la procédure de gestion des rafales de conversations comprend au moins une parmi :
- une procédure qui attribue une rafale de conversations une fois à chaque terminal engagé dans une session ;
- une procédure qui libère une rafale de conversations d'un terminal qui monopolise plus d'une certaine période de temps ;
- une procédure qui interdit l'attribution des rafales de conversations à un terminal particulier ;
- une procédure par laquelle l'autorité maîtresse est transférée du terminal ayant l'autorité maîtresse à un terminal tiers ;
- une procédure par laquelle une rafale de conversations attribuée à un terminal tiers est libérée de force et la priorité est donnée au terminal ayant l'autorité maîtresse pour une prochaine rafale de conversations ;
- une procédure qui fournit des allocations de rafales de conversations et des refus de rafales de conversations à un ou plusieurs autres terminaux ;
- une procédure qui attribue un accès équitable à de multiples terminaux.

7. Terminal (210) pour un système de communication de groupe supportant des communications bidirectionnelles à l'alternat, comprenant :
- un émetteur-récepteur (213) configuré pour envoyer et recevoir des signaux de communication ;
- un processeur (211) configuré pour coopérer avec l'émetteur-récepteur ; et
- un support de stockage (214) contenant des instructions pouvant être exécutées par le processeur ;
**caractérisé en ce que** les instructions, lorsqu'elles sont exécutées par le processeur, amènent le terminal à réaliser les étapes consistant à :
- recevoir une autorité maîtresse d'un serveur (220) ;
- déterminer une procédure de gestion des rafales de conversations en réponse à la réception de l'autorité maîtresse ; et
- envoyer des commandes concernant la procédure de gestion des rafales de conversations déterminée au serveur (220) pour donner instructions au serveur de contrôler l'attribution des rafales de conversations par rapport à un ou plusieurs autres terminaux selon la procédure de gestion des rafales de conversations déterminée.

8. Terminal selon la revendication 7, dans lequel le terminal (210) est configuré pour envoyer (S11) une demande au serveur (220) d'établir une session avec l'un ou plusieurs autres terminaux et de recevoir l'autorité maîtresse en réponse à l'envoi de la demande pour un établissement d'une session.

9. Terminal selon la revendication 7 ou 8, dans lequel la procédure de gestion des rafales de conversations comprend au moins une parmi :
- une procédure qui attribue une rafale de conversations une fois à chaque terminal engagé dans une session ;
- une procédure qui libère une rafale de conversations d'un terminal qui monopolise plus d'une certaine période de temps ;
- une procédure qui interdit l'attribution des rafales de conversations à un terminal particulier ;
- une procédure par laquelle l'autorité maîtresse est transférée du terminal ayant l'autorité maîtresse à un terminal tiers ;
- une procédure par laquelle une rafale de conversations attribuée à un terminal tiers est libérée de force et la priorité est donnée au terminal ayant l'autorité maîtresse pour une prochaine rafale de conversations ;
- une procédure qui fournit des attributions de rafales de conversations et des refus de rafales de conversations à un ou plusieurs autres terminaux ;
- une procédure qui permet un accès équitable à de multiples terminaux.
